# EUROPÄISCHE PATENTSCHRIFT

(11) **EP 3 146 178 B1**
(45) Veröffentlichungstag und Bekanntmachung des Hinweises auf die Patenterteilung: **20.12.2017**
(21) Anmeldenummer: 15727550.4
(22) Anmeldetag: 12.05.2015
(51) Int. Cl.: F02B 37/007, F02B 37/02, F02D 13/02, F02B 31/00

(54) **VIERTAKT-HUBKOLBEN-VERBRENNUNGSMOTOR MIT EINEM ABGASTURBOLADER UND BETRIEBSVERFAHREN HIERFÜR**
FOUR-STROKE RECIPROCATING-PISTON INTERNAL COMBUSTION ENGINE HAVING AN EXHAUST-GAS TURBOCHARGER, AND OPERATING METHOD FOR THE SAME
MOTEUR À COMBUSTION INTERNE À QUATRE TEMPS À PISTONS ALTERNATIFS MUNI D'UN TURBOCOMPRESSEUR, ET PROCÉDÉ PERMETTANT DE FAIRE FONCTIONNER LEDIT MOTEUR

(30) Priorität: 17.05.2014 DE 102014007310
(43) Veröffentlichungstag der Anmeldung: 29.03.2017
(73) Patentinhaber: Daimler AG, 70327 Stuttgart (DE)
(72) Erfinder: FREISINGER, Normann, 73547 Lorch (DE); FRIEDRICH, Jürgen, 70329 Stuttgart (DE)
(74) Vertreter: JENSEN & SON
(86) Internationale Anmeldenummer: PCT/EP2015/000973
(87) Internationale Veröffentlichungsnummer: WO 2015/176803

(56) Entgegenhaltungen:
- EP-A2- 1 400 667
- EP-A2- 2 119 888
- DE-A1-102005 055 996
- FR-A3- 2 916 226

## Beschreibung

Die Erfindung betrifft eine Viertakt-Hubkolben-Verbrennungsmotor mit einem Abgasturbolader nach dem Oberbegriff des Anspruchs 1 und Betriebsverfahren für einen solchen Verbrennungsmotor.

Aus der DE 102 43 473 A1 ist ein Verbrennungsmotor mit einem Abgasturbolader und mit mehreren Zylindern mit jeweils einem ersten und einem zweiten Auslassventil je Zylinder bekannt, wobei die ersten und die zweiten Auslassventile zu einer jeweiligen, getrennt ansteuerbaren Gruppe zusammengefasst sind. Abgas aus eine jeweiligen Gruppe von Auslassventilen zugeordneten Abgaskanälen kann getrennten Eingängen einer Zwillingsturbine des Abgasturboladers zugeführt werden. Bei niedriger Drehzahl wird lediglich eine Gruppe von Ventilen geöffnet, bei höheren Drehzahlen die Auslassventile beider Gruppen. Dabei besteht ein Problem einerseits darin, dass der Restgasgehalt in den Zylindern unerwünscht hoch ist, wenn bereits bei vergleichsweise niedrigen Drehzahlen auf einen Betrieb umgeschaltet wird, bei welchem alle Auslassventile öffnen. Andererseits verschlechtert sich der thermodynamische Wirkungsgrad des Motors, wenn die Drehzahlgrenze des Umschaltens zu höheren Drehzahlen verschoben wird.

Aufgabe der Erfindung ist es, einen gattungsgemäßen Verbrennungsmotor und ein Betriebsverfahren für diesen anzugeben, bei welchem die oben genannten Nachteile verringert sind.

Diese Aufgabe wird durch einen Verbrennungsmotor mit den Merkmalen des Anspruchs 1 und durch ein dementsprechendes Betriebsverfahren mit den Merkmalen des Anspruchs 7 gelöst. Eine Brennkraftmaschine mit zwei Turbinen und Auslassöffnungen mit unterschiedlichen Durchmessern ist aus FR 2 916 226 bekannt. Der erfindungsgemäße Viertakt-Hubkolben-Verbrennungsmotor weist eine gerade Anzahl von Zylindern und einen Abgasturbolader mit zwei zumindest im Wesentlichen voneinander getrennten Turbineneingängen auf. Jedem der Zylinder ist wenigstens ein für einen Einlass von Verbrennungsluft in einen Brennraum des Zylinders vorgesehener Einlasskanal mit einer brennraumseitigen Einlassöffnung zugeordnet. Ferner sind jedem der Zylinder ein für einen Auslass von Abgas aus dem Brennraum vorgesehener erster und zweiter Auslasskanal zugeordnet, wobei der erste Auslasskanal eine erste brennraumseitige Auslassöffnung, und der zweite Auslasskanal eine zweite brennraumseitige Auslassöffnung aufweist. Ein erstes und ein zweites Auslassventil dienen dabei zum Steuern des Abgasauslasses aus dem Brennraum über den ersten und den zweiten Auslasskanal durch Öffnen und Verschließen der ersten und zweiten Auslassöffnung. Dabei ist eine erste Hälfte der Zylinder über einen jeweiligen ersten Auslasskanal mit einem ersten der beiden Turbineneingänge und über einen jeweiligen zweiten Auslasskanal mit einem zweiten der beiden Turbineneingänge verbunden. Ferner ist eine zweite Hälfte der Zylinder über einen jeweiligen ersten Auslasskanal mit dem zweiten Turbineneingang und über einen jeweiligen zweiten Auslasskanal mit dem ersten Turbineneingang verbunden. Erfindungsgemäß ist vorgesehen, dass die zweiten Auslassöffnungen einen größeren Durchmesser als die ersten Auslassöffnungen aufweisen. Dementsprechend sind auch die Durchmesser des Ventiltellers der zugeordneten ersten und zweiten Ventile verschieden ausgeführt. Durch diese verschieden groß ausgeführten Ventiltellerdurchmesser bzw. Auslassöffnungsdurchmesser ist eine verbesserte Restgasausspülung ermöglicht. Auch ist eine Anhebung der Drehzahlgrenze, bei welchem von einem Betrieb mit Betätigung nur eines Auslassventils zu einem Betrieb mit Betätigung beider Auslassventile jeden Zylinders ohne Verschlechterung des thermodynamischen Wirkungsgrads des Motors ermöglicht.

Um die Vorteile möglichst wirksam zur Geltung zu bringen, ist es vorgesehen, die zweiten Auslassöffnungen bzw. den Ventiltellerdurchmesser der zweiten Auslassventile um wenigstens 10 %, vorzugsweise jedoch wenigstens 15 %, 20 % oder sogar mehr größer zu wählen als den Durchmesser der ersten Auslassöffnung bzw. den Ventiltellerdurchmesser der ersten Auslassventile.

Der erfindungsgemäße Motor ist vorzugsweise als 4-Zylinder oder 6-Zylindermotor, insbesondere in Reihenbauweise ausgeführt. Bei dem zugeordneten Turbolader kann es sich um einen so genannten Twin-Scroll-Lader oder Segment-Lader handeln.

In Ausgestaltung der Erfindung sind für jeden Zylinder ein erster Einlasskanal mit einer ersten Einlassöffnung und ein zweiter Einlasskanal mit einer zweiten Einlassöffnung vorgesehen. Der Motor ist damit als sogenannter 4-Ventilmotor ausgebildet. Dabei ist es besonders vorteilhaft, wenn in weiterer Ausgestaltung der Erfindung die zweiten Einlassöffnungen einen größeren Durchmesser als die ersten Einlassöffnungen aufweisen. Analog zu den zweiten Auslassöffnungen können die zweiten Einlassöffnungen einen Durchmesser aufweisen, der wenigstens 10 %, vorzugsweise jedoch wenigstens 15 %, 20 % oder sogar mehr größer gewählt ist als der Durchmesser der ersten Einlassöffnungen.

Eine besonders gute und stabile Verbrennung ist erzielbar, wenn in weiterer Ausgestaltung der Erfindung der erste Einlasskanal als Drallkanal oder Turbulenzkanal und ein der zweiten Einlasskanal als Füllkanal ausgebildet sind. Dadurch kann ein die Verbrennung stabilisierender Drall oder eine Turbulenz im Brennraum erzeugt werden. Hierzu ist die Richtung der Einlasskanalachsen in Bezug auf die Zylinderachse geeignet ausgeführt.

Weiterhin ist es für einen guten Ladungswechsel und für einen vorteilhaften Ablauf der Verbrennung in weiterer Ausgestaltung der Erfindung vorgesehen, dass in einer Draufsicht auf die Zylinder gesehen, die zweiten Einlassöffnungen den zweiten Auslassöffnungen diagonal gegenüberliegen.

In weiterer Ausgestaltung der Erfindung sind für den Verbrennungsmotor vier in Reihe angeordnete Zylinder eins bis vier vorgesehen, wobei der erste und der vierte Zylinder die erste Hälfte der Zylinder bilden und der zweite und der dritte Zylinder die zweite Hälfte der Zylinder bilden und für die Zylinder eine Zündreihenfolge von eins - drei - vier - zwei vorgesehen ist. Dabei ist von einer üblichen Zählweise der Zylinder, beginnend bei einer der Kraftabgabe des Motors gegenüberliegenden Seite auszugehen. Mit der angegebenen Zündfolge ist in Verbindung mit den unterschiedlich groß ausgeführten Auslassöffnungen eine besonders geringe Querbeeinflussung der Ausspülvorgänge und ein besonders niedriger verbleibender Restgasanteil in den Zylindern erzielbar.

Das der Erfindung zugrunde liegende Problem wird mit einem Verbrennungsmotor nach einem der Ansprüche 1 bis 6 auch durch ein Betriebsverfahren gelöst, bei welchem bei niedrigen Drehzahlen unterhalb einer vorgegebenen unteren Drehzahlgrenze die ersten oder die zweiten Auslassöffnungen durch ihnen zugeordnete Auslassventile ständig geschlossen sind. Oberhalb einer vorgebbaren oberen Drehzahlgrenze wird der Verbrennungsmotor so betrieben, dass die beiden Auslassöffnungen bei allen Zylindern durch Betätigung der Auslassventile in üblicher Weise gegen Ende des Arbeitstakts geöffnet und kurz nach dem oberen Totpunkt des Ausschiebetakts wieder geschlossen werden. Dabei ist es in Ausgestaltung des Verfahrens vorgesehen, dass die untere Drehzahlgrenze lastabhängig zwischen etwa 15 % und 50 % der Nenndrehzahl des Verbrennungsmotors vorgegeben wird.

In weiterer Ausgestaltung des Verfahrens sind bei einem Verbrennungsmotor mit zwei Einlassöffnungen je Zylinder, bei dem die zweiten Einlassöffnungen einen größeren Durchmesser als die ersten Einlassöffnungen aufweisen, bei niedrigen Drehzahlen unterhalb einer vorgegebenen Drehzahlgrenze des Verbrennungsmotors die ersten Einlassöffnungen mit dem kleineren Durchmesser durch ihnen jeweils zugeordneten Einlassventile ständig geschlossen. Auch durch diese Maßnahme wird der Ladungswechsel begünstigt.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: einen erfindungsgemäß ausgeführten Verbrennungsmotor in einer grob schematischen Prinzipdarstellung und
- Fig. 2: ein Last-Drehzahl-Kennfeld des Motors gemäß Fig. 1 mit gekennzeichneten Betriebsbereichen.

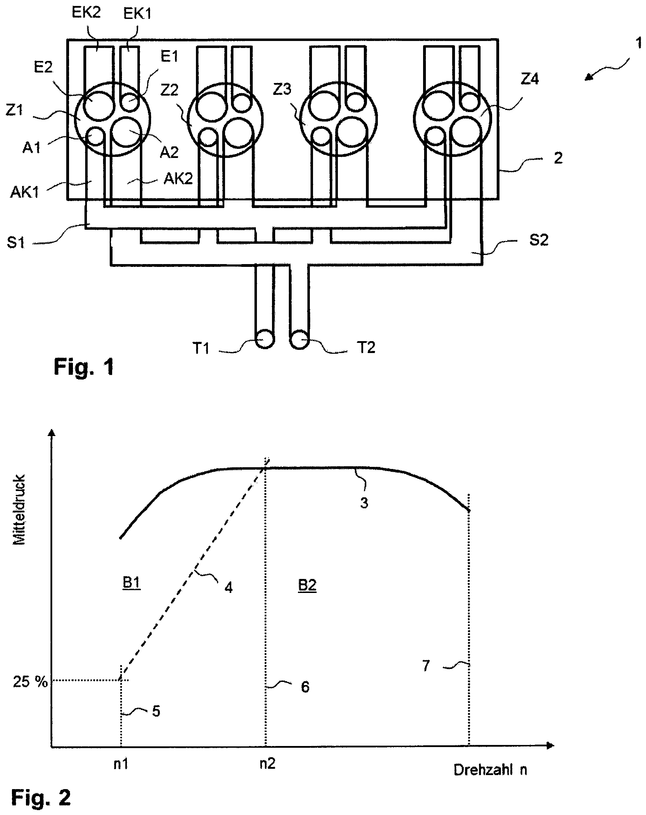

Eine vorteilhafte, beispielhafte Ausführungsform des erfindungsgemäßen Verbrennungsmotors wird nachfolgend mit Bezug auf Fig.1 näher erläutert. Der in Fig. 1 lediglich grob schematisch dargestellte Verbrennungsmotor 1 ist dabei in einer Draufsicht auf einen Zylinderkopf 2 gezeigt. Der Motor 1 ist vorliegend als nach dem Viertakt-Prinzip arbeitender Hubkolbenmotor ausgeführt. Es ist eine Ausführung als fremdgezündeter Otto-Motor oder als kompressionsgezündeter Dieselmotor möglich.

Der Motor 1 weist vorliegend vier gleichartig aufgebaute, in Reihe angeordnete Zylinder Z1 - Z4 auf. Jeder der Zylinder Z1 - Z4 weist zwei Einlassöffnungen E1, E2 zur Zufuhr von Verbrennungsluft auf, denen nicht näher dargestellte Einlassventile zugeordnet sind. Nachfolgend wird die mit E1 bezeichnete Einlassöffnung als erste Einlassöffnung und das zugeordnete Einlassventil wird als erstes Einlassventil bezeichnet. Analog wird die mit E2 bezeichnete Einlassöffnung als zweite Einlassöffnung und das zugeordnete Einlassventil wird als zweites Einlassventil bezeichnet. Die ersten und zweiten Einlassventile weisen an die bevorzugt rund ausgeführten Einlassöffnungen E1, E2 angepasste Durchmesser ihrer jeweiligen Ventilteller auf. Durch Betätigung der Einlassventile, beispielsweise über eine insbesondere verstellbare Nockenwelle, kann die Zufuhr der Verbrennungsluft zu den Zylindern Z1 - Z4 bzw. deren Brennraum gesteuert werden. Dabei ist den Zylindern Z1-Z4 die Verbrennungsluft über den ersten und zweiten Einlassöffnungen E1, E2 zugeordnete erste und zweite Einlasskanäle EK1, EK2 zuführbar.

Es ist vorgesehen, dass die ersten Einlassventile der Zylinder Z1 - Z4 gemeinsam und synchron angesteuert werden können, um die ersten Einlassöffnungen E1 nach einem vorgegebenen oder vorgebbaren zeitlichen Ablauf zu öffnen und zu schließen. Gleiches gilt für die zweiten Einlassventile, wobei die ersten Einlassventile vorzugsweise getrennt von den zweiten Einlassventilen angesteuert werden können.

Für einen Auslass von Abgas aus den Zylindern Z1 - Z4 bzw. aus dem jeweils zugehörigen Brennraum weisen diese jeweils eine erste Auslassöffnung A1 und eine zweite Auslassöffnung A2 auf, in welche ein jeweils zugeordneter erster Auslasskanal AK1 und AK2 brennraumseitig ausmündet. Dabei ist einer jeweiligen ersten Auslassöffnung A1 ein erstes Auslassventil und einer jeweiligen zweiten Auslassöffnung A2 ein zweites Auslassventil zugeordnet, was nicht näher dargestellt ist. Analog zu den Einlassventilen weisen die Auslassventile einen an die jeweilige Auslassöffnung angepassten Durchmesser ihres jeweiligen Ventiltellers auf. Weiterhin wird analog zu den Einlassventilen durch Betätigung der Auslassventile, beispielsweise über eine insbesondere verstellbare Nockenwelle, ein Abgasauslass aus den Zylindern Z1 - Z4 bzw. deren Brennraum gesteuert. Die Auslassventile sind dabei synchron und gruppenweise steuerbar.

Vorliegend ist für den Motor 1 eine Zündfolge von 1 - 3 - 4 - 2 vorgesehen. Beginnend mit einem Zündereignis beim ersten Zylinder Z1 erfolgt somit jeweils um einen Takt verschoben anschließend in dieser Reihenfolge eine Zündung bei den Zylindern Z3, Z4 und Z2. Um einen Gaswechsel zu ermöglichen, der von Querbeeinflussungen der Zylinder untereinander möglichst frei ist, sind zwei separate Abgassammelrohre S1 und S2 vorgesehen, in welche die ersten und zweiten Auslasskanäle AK1 und AK2 der Zylinder Z1 - Z4 münden. Dabei münden vorliegend die ersten Auslasskanäle AK1 des ersten Zylinders Z1 und des vierten Zylinders Z4 sowie die zweiten Auslasskanäle AK2 des zweiten Zylinders Z2 und des dritten Zylinders Z3 in das erste Abgassammelrohr S1. Die weiteren Auslasskanäle AK1, AK2 der Zylinder Z1 - Z4 münden in das zweite Abgassammelrohr S2. Vom ersten Abgassammelrohr S1 aufgenommenes Abgas ist einem ersten Turbineneingang T1 eines nicht näher dargestellten Zwillings-Abgasturboladers mit zwei im Wesentlichen voneinander getrennten Turbineneingängen T1 und T2 zuführbar. Hierzu ist das erste Sammelrohr S1 direkt mit dem ersten Turbineneingang T1 verbunden. Das zweite Abgassammelrohr S2 ist direkt mit dem zweiten Turbineneingang T2 verbunden. Die Zylinder Z1 - Z4 des Motors 1 können somit in eine erste Hälfte, gebildet durch den ersten Zylinder Z1 und den vierten Zylinder Z4, und in eine zweite Hälfte, gebildet durch den zweiten Zylinder Z2 und den dritten Zylinder Z3 aufgeteilt werden. Bei der ersten Hälfte der Zylinder sind also die ersten Auslasskanäle AK1 der zugehörigen Zylinder Z1 und Z4 fluidtechnisch mit dem ersten Turbineneingang T1 verbunden, die zweiten Auslasskanäle AK2 mit dem zweiten Turbineneingang T2. Bei der zweiten Hälfte der Zylinder sind umgekehrt die ersten Auslasskanäle AK1 der zugeordneten Zylinder Z2 und Z3 mit dem zweiten Turbineneingang T2 verbunden, während die zweiten Auslasskanäle AK2 mit dem ersten Turbineneingang T2 verbunden sind. In Verbindung mit einer weiter unten näher beschriebenen getrennten Ansteuerung der ersten und zweiten Auslassventile ist damit ein dynamischer Betrieb des Abgasturboladers unter Vermeidung eines sogenannten Turbolochs ermöglicht.

Der Abgasturbolader ist vorzugsweise als so genannter Twin-Scroll-Lader oder als Segment-Turbolader ausgebildet. Dabei kann auch eine asymmetrische Ausführung vorgesehen sein, bei welchem durch in den ersten Turbineneingang T1 bzw. in den zweiten Turbineneingang T2 einströmendes Abgas weniger oder mehr als die Hälfte der Turbinenschaufeln beaufschlagt wird. Beispielsweise kann bei einer Ausführungsform als Segmentturbine mit 10 Schaufeln in den ersten Turbineneingang T1 oder in den zweiten Turbineneingang T2 einströmendes Abgas vier oder sechs Schaufeln beaufschlagen. Bei einer Segmentturbine mit sieben Schaufeln können analog vier und drei Schaufeln von Abgas eintretend durch den ersten Turbineneingang T1 oder den zweiten Turbineneingang T2 beaufschlagt werden. Entsprechende Turbolader-Ausführungsformen sind dem Fachmann bekannt, weshalb hier nicht näher darauf eingegangen wird.

Nachfolgend wird unter Bezug auf Fig. 2 ein bevorzugter Betrieb des Motors 1, speziell in Bezug auf eine Ventilsteuerung näher erläutert.

Fig. 2 zeigt schematisch ein Last-Drehzahl-Kennfeld des Motors 1, in welchem eine Volllast-Kennlinie 3 einen Nennwert eines Motor-Mitteldrucks in Abhängigkeit von der Motordrehzahl darstellt. Eine Linie 4 kennzeichnet eine Betriebsbereichsgrenze, welche einen ersten Betriebsbereich B1 mit vergleichsweise niedrigen Drehzahlen von einem zweiten Betriebsbereich B2 mit demgegenüber höheren Drehzahlen trennt. Die Linie 4 der Betriebsbereichsgrenze verläuft durch einen ersten Betriebspunkt mit etwa 25 % der Nennlast und einer ersten Drehzahl n1 sowie durch einen zweiten Betriebspunkt, der auf der Volllast-Kennlinie 3 und bei einer zweiten Drehzahl n2 liegt. Die erste Drehzahl n1 beträgt etwa 15 % der Nenndrehzahl und die zweite Drehzahl n2 beträgt etwa 50 % der Nenndrehzahl.

Im Betriebsbereich B1 wird der Motor 1 erfindungsgemäß so betrieben, dass nur eines der beiden Auslassventile eines jeden Zylinders Z1 - Z4 betätigt wird, während das andere über alle vier Arbeitstakte die zugehörige Auslassöffnung verschlossen hält. Dies ermöglicht einen thermodynamisch günstigen Betrieb des Motors 1 und eine dynamische Reaktion des Abgasturboladers. Jedoch steigt mit steigender Drehzahl im ersten Betriebsbereich B1 der Abgasgegendruck relativ stark an und das Abgas wird zunehmend schlechter ausgeschoben, weshalb sich der thermodynamische Wirkungsgrad des Motors 1 verschlechtert. Daher wird der Motor 1 bei Erreichen der Betriebsbereichsgrenze im zweiten Betriebsbereich B2 so betrieben, dass beide Auslassventile betätigt werden. Dabei steigt jedoch speziell bei niedrigen Drehzahlen der Restgasgehalt in den Zylindern durch eine Querbeeinflussung von in Bezug auf die Zündfolge benachbarter Zylinder an, was sich ebenfalls ungünstig auf den thermodynamischen Wirkungsgrad des Motors 1 auswirkt. Diesem Nachteil wird erfindungsgemäß dadurch begegnet, dass die zweiten Auslassöffnungen A2 der Zylinder Z1 - Z4 größer ausgeführt werden als die ersten Auslassöffnungen A1. Somit sind auch die Ventiltellerdurchmesser der den zweiten Auslassöffnungen A2 zugeordneten zweiten Auslassventile größer ausgeführt als die Ventiltellerdurchmesser der den ersten Auslassöffnungen A1 zugeordneten ersten Auslassventile. Dabei ist es bevorzugt, den Durchmesser der zweiten Auslassöffnungen A2 wenigstens um 10 % vorzugsweise sogar um wenigstens 15 % größer zu wählen, als den Durchmesser der ersten Auslassöffnungen A1. Entsprechendes gilt für den Ventiltellerdurchmesser der zugeordneten Auslassventile. Diese Maßnahme ermöglicht eine deutlich bessere Restgasausspülung aus den Zylindern und damit eine entsprechende Verbesserung des thermodynamischen Motorwirkungsgrads. Dabei ist es bevorzugt, wenn im ersten Betriebsbereich B1 ausschließlich die zweiten Auslassventile mit den größeren Ventiltellerdurchmessern betätigt werden. Die ersten Auslassöffnungen A1 werden somit durch die nicht betätigten ersten Auslassventile ständig geschlossen gehalten.

Durch folgende Maßnahmen können Verbrennung und/oder Turboladerbetrieb bzw. Motorwirkungsgrad weiterhin verbessert werden. Zunächst ist es vorteilhaft, wenn, wie in Fig. 1 dargestellt, die zweiten Einlassöffnungen E2 und damit die Ventiltellerdurchmesser der zweiten Einlassventile größer gewählt werden als die ersten Einlassöffnungen E1 bzw. die Ventiltellerdurchmesser der ersten Einlassventile. Der Größenunterschied wird dann analog zu dem der Auslassventile ebenfalls wenigstens 10 %, vorzugsweise jedoch wenigstens 15 % größer gewählt. Dabei ist es bevorzugt, wenn die zweiten, größeren Auslassöffnungen A2 in einer Draufsicht auf den Zylinderkopf 2 wie dargestellt den zweiten, größeren Einlassöffnungen E2 diagonal gegenüberstehend angeordnet sind. Generell ist es vorzugsweise vorgesehen, die Einlassöffnungen E1 und E2 etwas größer, d.h. ca. 10 % bis 20 % größer als die korrespondierenden Auslassöffnungen A1, A2 auszuführen. Ferner ist es vorzugsweise vorgesehen, die Einlasskanäle EK1, EK2 und/oder die Auslasskanäle AK1, AK2 über den größten Teil ihrer Länge an den Durchmesser der Einlassöffnungen E1, E2 bzw. den Durchmesser der Auslassöffnungen A1, A2 anzupassen. D.h. der Durchmesser des ersten Einlasskanals EK1 wird über zumindest den größten Teil seiner Länge etwa entsprechend dem Durchmesserverhältnis der Einlassventilöffnungen E1, E2 kleiner gewählt als der Durchmesser des zweiten Einlasskanals EK2. Entsprechendes kann für die Auslasskanäle AK1, AK2 gelten.

Weiterhin kann es vorgesehen sein, dass der erste Einlasskanal EK1 als Drallkanal oder Turbulenzkanal und der zweite Einlasskanal EK2 als Füllkanal ausgebildet sind. Dies ist besonders vorteilhaft, wenn der erste Einlasskanal EK1 mit einem kleineren Durchmesser ausgeführt ist wie der zweite Einlasskanal EK2. Der als Füllkanal ausgebildete zweite Einlasskanal EK2 ist dann bevorzugt in Bezug auf seine Mittelachse an der zweiten Einlassöffnung E2 annähernd in Richtung der Zylinderhochachse ausgerichtet. Der erste Einlasskanal EK1 ist demgegenüber bevorzugt schräger zur Zylinderhochachse ausgerichtet, um in den Brennraum eintretendem Abgas eine Drallbewegung um die Zylinderhochachse oder eine Tumble-Bewegung um eine Zylinderquerachse zu vermitteln.

In Bezug auf den Betrieb des Motors 1 kann es vorgesehen sein, über beide Betriebsbereiche B1 und B2 hinweg beide Einlassventile eines jeden Zylinders Z1 - Z4 zu betätigen. Es kann jedoch auch vorgesehen sein, im ersten Betriebsbereich B1 lediglich eines der beiden Einlassventile zu betätigen und mit den anderen die jeweilige Einlassöffnung durchgehend geschlossen zu halten. Im Falle von zwei verschieden groß ausgeführten Einlassöffnungen ist es dabei bevorzugt, im ersten Betriebsbereich B1 nur die größeren, zweiten Einlassventile zu betätigen. Weiterhin kann ein mittlerer Betriebsbereich B3 vorgesehen sein, der in Bezug auf seine Last- und Drehzahlwerte unterhalb des zweiten Betriebsbereichs B2 liegt. Der erste Betriebsbereich B1 kann dann nach niedrigeren Lasten und Drehzahlen verschoben sein. Bei einer solchen Aufteilung ist es vorzugsweise vorgesehen, im unteren, ersten Betriebsbereich B1 lediglich das dem kleineren, ersten Auslasskanal AK1 zugeordnete erste Auslassventil zu betätigen. Im mittleren Betriebsbereich B3 wird dann lediglich das dem größeren, zweiten Auslasskanal AK2 zugeordnete zweite Auslassventil betätigt und im oberen, zweiten Betriebsbereich B2 , werden beide Auslassventile betätigt.

## Patentansprüche

1. Viertakt-Hubkolben-Verbrennungsmotor mit einer geraden Anzahl von Zylindern und einem Abgasturbolader mit zwei zumindest im Wesentlichen voneinander getrennten Turbineneingängen (T1, T2), wobei jedem der Zylinder zugeordnet sind
- wenigstens ein für einen Einlass von Verbrennungsluft in einen Brennraum des Zylinders vorgesehener Einlasskanal (EK1; EK2) mit einer brennraumseitigen Einlassöffnung (E1; E2),
- ein für einen Auslass von Abgas aus dem Brennraum des Zylinders vorgesehener erster Auslasskanal (AK1) mit einer ersten brennraumseitigen Auslassöffnung (A1),
- ein für einen Auslass von Abgas aus dem Brennraum des Zylinders vorgesehener zweiter Auslasskanal (AK2) mit einer zweiten brennraumseitigen Auslassöffnung (A2),
wobei eine erste Hälfte der Zylinder über einen jeweiligen ersten Auslasskanal (AK1) mit einem ersten der beiden Turbineneingänge (T1, T2) und über einen jeweiligen zweiten Auslasskanal (AK2) mit einem zweiten der beiden Turbineneingänge (T1, T2) verbunden ist und eine zweite Hälfte der Zylinder über einen jeweiligen ersten Auslasskanal (AK1) mit dem zweiten Turbineneingang (T2) und über einen jeweiligen zweiten Auslasskanal (AK2) mit ersten Turbineneingang (T1) verbunden ist, **dadurch gekennzeichnet, dass**
die zweiten Auslassöffnungen (A2) einen größeren Durchmesser als die ersten Auslassöffnungen (A1) aufweisen.

2. Verbrennungsmotor nach Anspruch 1,
**dadurch gekennzeichnet, dass**
für jeden Zylinder ein erster Einlasskanal (EK1) mit einer ersten Einlassöffnung (E1) und ein zweiter Einlasskanal (EK2) mit einer zweiten Einlassöffnung (E2) vorgesehen sind.

3. Verbrennungsmotor nach Anspruch 2,
**dadurch gekennzeichnet, dass**
die zweiten Einlassöffnungen (E2) einen größeren Durchmesser als die ersten Einlassöffnungen (E1) aufweisen.

4. Verbrennungsmotor nach Anspruch 2 oder 3,
**dadurch gekennzeichnet, dass**
der erste Einlasskanal (EK1) als Drallkanal oder Turbulenzkanal und der zweite Einlasskanal (EK2) als Füllkanal ausgebildet sind.

5. Verbrennungsmotor nach Anspruch 3 oder 4,
**dadurch gekennzeichnet, dass**
in einer Draufsicht auf die Zylinder gesehen, die zweiten Einlassöffnungen (E2) den zweiten Auslassöffnungen (A2) diagonal gegenüberliegen.

6. Verbrennungsmotor nach einem der Ansprüche 1 bis 5,
**dadurch gekennzeichnet, dass**
vier in Reihe angeordnete Zylinder (Z1, Z2, Z3, Z4) vorgesehen sind, wobei der erste Zylinder (Z1) und der vierte Zylinder (Z4) die erste Hälfte der Zylinder bilden und der zweite Zylinder (Z2) und der dritte Zylinder (Z3) die zweite Hälfte der Zylinder bilden und für die Zylinder (Z1, Z2, Z3, Z4) eine Zündreihenfolge von eins - drei - vier-zwei vorgesehen ist.

7. Betriebsverfahren für einen Verbrennungsmotor nach einem der Ansprüche 1 bis 6,
**dadurch gekennzeichnet, dass**
bei niedrigen Drehzahlen unterhalb einer vorgegebenen unteren Drehzahlgrenze die ersten Auslassöffnungen (A1) oder die zweiten Auslassöffnungen (A2) durch ihnen jeweils zugeordnete Auslassventile ständig geschlossen sind.

8. Betriebsverfahren nach Anspruch 7,
**dadurch gekennzeichnet, dass**
die untere Drehzahlgrenze lastabhängig zwischen etwa 15 % und 50 % der Nenndrehzahl des Verbrennungsmotors (1) vorgegeben wird.

9. Betriebsverfahren nach Anspruch 6 oder 7,
**dadurch gekennzeichnet, dass**
bei einem Verbrennungsmotor (1) mit zwei Einlassöffnungen (E1, E2) je Zylinder, bei dem die zweiten Einlassöffnungen (E2) einen größeren Durchmesser als die ersten Einlassöffnungen (E1) aufweisen, bei niedrigen Drehzahlen unterhalb einer vorgegebenen Drehzahlgrenze des Verbrennungsmotors die ersten Einlassöffnungen (E1) mit dem kleineren Durchmesser durch ihnen jeweils zugeordneten Einlassventile ständig geschlossen sind.

## Claims

1. Four-stroke reciprocating piston internal combustion engine, having an even number of cylinders and an exhaust gas turbocharger, having two turbine inlets (T1, T2) at least substantially separated from each other, wherein each of the cylinders has assigned to it:
- at least one intake duct (EK1; EK2) provided for an intake of combustion air into a combustion chamber of the cylinder, having a combustion-chamber-side intake opening (E1; E2),
- a first exhaust duct (AK1) provided for an exhaust of exhaust gas from the combustion chamber of the cylinder, having a first combustion-chamber-side exhaust opening (A1),
- a second exhaust duct (AK2) provided for an exhaust of exhaust gas from the combustion chamber of the cylinder, having a second combustion-chamber-side exhaust opening (A2),
wherein a first half of the cylinders are connected via a respective first exhaust duct (AK1) to a first of the two turbine inlets (T1, T2) and via a respective second exhaust duct (AK2) to a second of the two turbine inlets (T1, T2), and a second half of the cylinders are connected via a respective first exhaust duct (AK1) to the second turbine inlet (T2) and via a respective second exhaust duct (AK2) to the first turbine inlet (T1),
**characterised in that**
the second exhaust openings (A2) have a larger diameter than the first exhaust openings (A1).

2. Internal combustion engine according to claim 1,
**characterised in that**
a first intake duct (EK1) with a first intake opening (E1) and a second intake duct (EK2) with a second intake opening (E2) are provided for each cylinder.

3. Internal combustion engine according to claim 2,
**characterised in that**
the second intake openings (E2) have a larger diameter than the first intake openings (E1).

4. Internal combustion engine according to claim 2 or 3,
**characterised in that**
the first intake duct (EK1) is formed as a swirl duct or turbulence duct and the second intake duct (EK2) as a filling duct.

5. Internal combustion engine according to claim 3 or 4,
**characterised in that**
when looking from above down onto the cylinders, the second intake openings (E2) are disposed diagonally opposite the second exhaust openings (A2).

6. Internal combustion engine according to one of claims 1 to 5,
**characterised in that**
four cylinders (Z1, Z2, Z3, Z4) arranged in series are provided, wherein the first cylinder (Z1) and the fourth cylinder (Z4) form the first half of the cylinders, and the second cylinder (Z2) and the third cylinder (Z3) form the second half of the cylinders and, for the cylinders (Z1, Z2, Z3, Z4), a firing sequence of one - three - four - two is provided.

7. Operating method for an internal combustion engine according to one of claims 1 to 6,
**characterised in that**
at low speeds below a predefined lower speed threshold the first exhaust openings (A1) or the second exhaust openings (A2) are constantly closed by exhaust valves respectively assigned to them .

8. Operating method according to claim 7,
**characterised in that**
the lower speed threshold is predefined, as a function of load, between approximately 15% and 50% of the nominal speed of the internal combustion engine (1).

9. Operating method according to claim 6 or 7,
**characterised in that**
in the case of an internal combustion engine (1) having two intake openings (E1, E2) for each cylinder, wherein the second intake openings (E2) have a larger diameter than the first intake openings (E1), at low speeds below a first predefined speed threshold of the internal combustion engine, the first intake openings (E1) with the smaller diameter are constantly closed by inlet valves respectively assigned thereto.

## Revendications

1. Moteur à combustion interne à quatre temps à pistons alternatifs comprenant un nombre pair de cylindres et un turbocompresseur comprenant au moins deux admissions de turbine (T1, T2) sensiblement séparées l'un de l'autre, chacun des cylindres étant associé
- à au moins un conduit d'admission (EK1, EK2) prévu pour une admission d'air de combustion dans la chambre de combustion du cylindre, comprenant un orifice d'admission (E1, E2) côté chambre de combustion,
- à un premier conduit d'échappement (AK1) prévu pour un échappement de gaz d'échappement provenant de la chambre de combustion du cylindre, comportant un premier orifice d'échappement (A1) côté chambre de combustion,
- à un second conduit d'échappement (AK2) prévu pour un échappement de gaz d'échappement provenant de la chambre de combustion du cylindre, comportant un second orifice d'échappement (A2) côté chambre de combustion, une première moitié du cylindre étant reliée par l'intermédiaire d'un premier conduit d'échappement respectif (AK1) à une première entrée parmi les deux admissions de turbine (T1, T2) et par l'intermédiaire d'un second conduit d'échappement respectif (AK2) à une seconde admission parmi les deux admissions de turbine (T1, T2) et une seconde moitié du cylindre étant reliée par l'intermédiaire d'un premier conduit d'échappement respectif (AK1) à la seconde admission de turbine (T2) et par l'intermédiaire d'un second conduit d'échappement respectif (AK2) à la première admission de turbine (T1), **caractérisé en ce que** les seconds orifices d'échappement (A2) présentent un diamètre supérieur à celui des premiers orifices d'échappement (A1).

2. Moteur à combustion interne selon la revendication 1, **caractérisé en ce qu'**il est prévu pour chaque cylindre un premier conduit d'admission (EK1) comportant un premier orifice d'admission (E1) et un second conduit d'admission (EK2) comportant un second orifice d'admission (E2).

3. Moteur à combustion interne selon la revendication 2, **caractérisé en ce que** les seconds orifices d'admission (E2) présentent un diamètre supérieur à celui des premiers orifices d'admission (E1).

4. Moteur à combustion interne selon la revendication 2 ou la revendication 3, **caractérisé en ce que** le premier conduit d'admission (EK1) est conçu comme un conduit de distribution ou un conduit de turbulence et le second conduit d'admission (EK2) étant conçu comme un conduit de remplissage.

5. Moteur à combustion interne selon la revendication 3 ou la revendication 4, **caractérisé en ce que** dans une vue de dessus des cylindres, les deux seconds orifices d'admission (E2) font face en diagonale aux seconds orifices d'échappement (A2).

6. Moteur de combustion interne selon l'une quelconque des revendications 1 à 5, **caractérisé en ce qu'**il est prévu quatre cylindres (Z1, Z2, Z3, Z4) montés en série, le premier cylindre (Z1) et le quatrième cylindre (Z4) forment la première moitié des cylindres et le deuxième cylindre (Z2) et le troisième cylindre (Z3) forment la seconde moitié des cylindres et pour les cylindres (Z1, Z2, Z3, Z4) il est prévu un ordre d'allumage : un - trois - quatre - deux.

7. Procédé de fonctionnement d'un moteur à combustion selon l'une quelconque des revendications 1 à 6, **caractérisé en ce qu'**à des vitesses réduites en dessous d'une limite de vitesse inférieure prédéfinie les premiers orifices d'échappement (A1) ou les seconds orifices d'échappement (A2) sont fermés en permanence par des soupapes d'échappement qui leur sont associées respectivement.

8. Procédé de fonctionnement selon la revendication 7, **caractérisé en ce que** la limite de vitesse inférieure est prédéfinie en fonction de la charge entre environ 15 % et 50 % de la vitesse nominale du moteur à combustion interne (1).

9. Procédé de fonctionnement selon la revendication 6 ou la revendication 7, **caractérisé en ce que** pour un moteur à combustion interne (1) comportant deux orifices d'admission (E1, E2), les deux seconds orifices d'admission (E2) présentent un diamètre supérieur à celui des premiers orifices d'admission (E1), à des vitesses réduites en dessous d'une limite de vitesse prédéfinie du moteur à combustion interne les premiers orifices d'admission (E1) ayant un diamètre plus petit sont fermés en permanence par des soupapes d'admission leur étant associées.
